# EUROPEAN PATENT APPLICATION

(11) **EP 4 131 021 A1**
(43) Date of publication of application: **08.02.2023**
(21) Application number: 22186858.1
(22) Date of filing: 26.07.2022
(51) Int. Cl.: G06F 16/33, G06Q 30/02

(54) **AUTOMATIC SYNONYMS, ABBREVIATIONS, AND ACRONYMS DETECTION**

(30) Priority: 05.08.2021 US 202117395231
(71) Applicant: eBay, Inc., San Jose, CA 95125 (US)
(72) Inventor: GUY, Ido, San Jose, 95125 (US); NOVGORODOV, Viatcheslav, San Jose, 95125 (US)
(74) Representative: Müller-Boré & Partner Patentanwälte PartG mbB

(57) **Abstract**

A completely unsupervised solution for generating and maintaining a list of lexically similar terms for an e-commerce system is provided. Given a particular electronic collection of items in an e-commerce system, each term in a first item listing is initially paired with each term in a second item listing to form a set of token pairs. The token pairs represent possible candidates for being synonyms. For a respective token pair, an attempt is made to match the shortest token of the token pair to the longest token of the token pair, character by character. If a match is successful, the terms in the token pair are automatically labeled as synonyms for the particular electronic collection of items. Some implementations automatically filter out false positives and/or token pairs that are unrelated and not likely synonyms. The solution can be performed at the granularity of a product, category, vertical, or entire catalog.

## Description

### BACKGROUND

E-commerce systems provide a way for users to buy or sell items online. Users often use synonyms, abbreviations, and acronyms when listing or searching for items online. However, in conventional systems, manually generating and maintaining a list of such synonyms requires significant human resources and these systems suffer from coverage issues.

### SUMMARY

At a high level, aspects described herein relate to system, media, and methods for automatically detecting synonyms, abbreviations, and acronyms. More particularly, a completely unsupervised solution for generating and maintaining a list of lexically similar terms for an e-commerce system is provided. Given a particular electronic collection of items in an e-commerce system, each term in a first item listing is initially paired with each term in a second item listing to form a set of token pairs. The token pairs represent possible candidates for being synonyms. For a respective token pair, an attempt is made to match the shortest token of the token pair to the longest token of the token pair, character by character. If a match is successful, the terms in the token pair are automatically labeled as synonyms for the particular electronic collection of items. Some implementations automatically filter out false positives and/or token pairs that are unrelated and not likely synonyms. The solution can be performed at the granularity of a product, category, vertical, or entire catalog.

This summary is intended to introduce a selection of concepts in a simplified form that is further described in this disclosure. The summary is not intended to identify key or essential features of the claimed subject matter, nor is it intended to be an aid in determining the scope of the claimed subject matter. Additional objects, advantages, and novel features of the technology will be set forth in part in the description that follows, and in part will become apparent to those skilled in the art upon examination of the disclosure or learned through practice of the technology.

### BRIEF DESCRIPTION OF THE DRAWINGS

The present technology is described in detail below with reference to the attached drawing figures, wherein:
FIG. 1 is a block diagram of an exemplary system for providing automatic synonyms, abbreviations, and acronyms detection, in accordance with aspects described herein;
FIG. 2 is a block diagram of an exemplary detection engine, in accordance with aspects described herein;
FIG. 3 depicts a flow diagram showing an exemplary method for providing automatic synonyms, abbreviations, and acronyms detection, in accordance with an aspect described herein;
FIG. 4 depicts a flow diagram showing an exemplary method for filtering tokens in an automatic synonyms, abbreviations, and acronyms detection system, in accordance with an aspect described herein;
FIG. 5 depicts a flow diagram showing an exemplary method for determining tokens are not false positives in an automatic synonyms, abbreviations, and acronyms detection system, in accordance with an aspect described herein;
FIG. 6 depicts a flow diagram showing an exemplary method for determining an associated item of an electronic collection of items satisfies a threshold of usage within the electronic collection of items in an automatic synonyms, abbreviations, and acronyms detection system, in accordance with an aspect described herein; and
FIG. 7 is an example computing device suitable for implementing the described technology, in accordance with an embodiment described herein.

### DETAILED DESCRIPTION

As mentioned in the background, e-commerce systems provide a way for users to buy or sell items online. However, users often use different terms with the same meaning (e.g. display vs. monitor) when listing or searching for items online. Knowledge of synonym usage is critical for various reasons including attribute normalization, product knowledge service building, and search experience improvement. Although some synonym pairs are completely different terms (e.g., display and monitor), others are lexically similar terms (i.e., where one term is a shortened form of another term, namely abbreviations and acronyms). For example, when listing or searching for items, different users may use the term "TV" instead of television, "ed" instead of edition, or "vol" instead of volume.

Understanding that these lexically similar terms have the same meaning is important and can lead to a better buying and selling experience by improving search relevance, product categorization, and suitable alternatives. For example, if a user searches for an "18-volt battery" and the "18-volt battery" is out of stock, the e-commerce system should recognize that an item listed as "18v battery" should be returned in the search results. Conventional systems are unable to automatically detect the use of synonyms, abbreviations, and acronyms. Instead, conventional systems require manually generating and maintaining a list of such synonyms which requires significant human resources. Accordingly, these systems suffer from coverage issues.

The technology provided by this disclosure alleviates many of these problems inherent in the traditional methods of synonym detection. In general, the technology automatically detects synonyms, abbreviations, and acronyms by providing a completely unsupervised solution that generates and maintains a list of lexically similar terms for an e-commerce system. Given a particular electronic collection of items in an e-commerce system, each term in a first item listing is initially paired with each term in a second item listing to form a set of token pairs. The token pairs represent possible candidates for being synonyms.

In embodiments, tokens pairs can be initially filtered prior to attempting the match. To do so, a trained machine learning model filters out token pairs form the aggregated list of token pair that do not meet a threshold similarity and are not likely synonyms. Additionally or alternatively, token pairs may be filtered from the aggregated list of token pairs if the first token and the second token of the token pair are identical.

In embodiments, false positives can be eliminated. For example, false positives may occur with model variants (e.g., "CD/DVD player," vs. "CD player" or "iPhone X" vs. "iPhone Xs"). Other false positives may occur with tokens that actually have opposite meanings but may otherwise be determined to be matches (e.g., "with" vs. "without," "texture" vs. "textureless," "strap" vs. "strapless"). To do so, prior to determining the first token and the second token are synonyms, a set of rules corresponding to false positives is accessed. Utilizing the set of rules, the first token and the second token can be determined to not be a false positive.

To identify matches, for a respective token pair, an attempt is made to match the shortest token of the token pair to the longest token of the token pair, character by character. If a match is successful, the terms in the token pair are automatically labeled as synonyms for the particular electronic collection of items. The solution can be performed at the granularity of a product, category, vertical, or entire catalog.

Accordingly, in one aspect, an embodiment of the present invention is directed to a method. The method includes generating an aggregated list of token pairs from a first text string and a second text string. Each token pair comprises a token from the first text string and a token from the second text string. The method also includes, for a first token pair from the aggregated list of token pairs, attempting to match a first token of the first token pair to a second token of the first token pair. The method further includes, upon matching the first token to the second token, determining the first token and the second token are synonyms. The method also includes, automatically, without human intervention, labeling the first token and the second token as synonyms for an electronic collection of items.

In another aspect of the invention, an embodiment is directed to one or more computer storage media having computer-executable instructions stored thereon that, when executed by a processor, causes the processor to perform operations. The operations comprise generating an aggregated list of token pairs from a first text string and a second text string. Each token pair comprises a token from the first text string and a token from the second text string. The operations also comprise, utilizing a trained machine learning model, filtering out token pairs form the aggregated list of token pair that do not meet a threshold similarity. The operations further comprise filtering out token pairs from the aggregated list of token pairs if the first token of the token pair is a match to the second token of the token pair. The operations also comprise, automatically, without human intervention, labeling the first token and the second token as synonyms for an electronic collection of items.

In a further aspect, an embodiment is directed to a system that includes at least one processor and one or more computer storage media having computer-executable instructions stored thereon that, when executed by the at least one processor, cause the at least one processor to perform operations comprising: generating an aggregated list of token pairs from a first text string and a second text string, each token pair comprising a token from the first text string and a token from the second text string; for a first token pair from the aggregated list of token pairs, attempting to match a first token of the first token pair to a second token of the first token pair; prior to determining the first token and the second token are synonyms, accessing a set of rules corresponding to false positives; utilizing the set of rules, determining the first token and the second token are not a false positive; and automatically, without human intervention, labeling the first token and the second token as synonyms for an electronic collection of items.

While the present technology is presented herein in the context of an electronic marketplace, it will be recognized that this is only one example use scenario in which the described technology may be employed. One of ordinary skill in the art will appreciate that the underlying technical methods described herein for automatically detecting synonyms, abbreviations, and acronyms across many different contexts. It is impractical to describe all of the various contexts in which the technology can be employed. Thus, for simplicity and consistency, the technology will continue to be described in the context of e-commerce.

In view of this, it should become apparent that the technology of this application solves problems that are rooted in and arise from the use of the Internet. Locating information stored at various connected servers and effectively presenting it to a user is a technological challenge and limitation of the Internet. The use of the Internet is only as good as the ability to locate desired information stored at one computing device and remotely recall that information for presentation at another computing device. Due to the vast amount of information on the Internet, however, identifying and recalling search results do not permit effective navigation and use of the Internet unless items are ranked in a meaningful way. In this way, ranking the identified and recalled information may be considered essential to the functioning of the Internet and a user's ability to use the Internet to identify the vast amounts of information stored at an innumerable number of remote servers.

The technology described herein provides solutions to these problems. For instance, by providing a completely unsupervised process, no additional labeling effort (i.e., no human intervention) is required. Because synonyms, abbreviations, and acronyms are automatically detected, certain token pairs can be initially filtered out, and false positives can be avoided, more precise results can be provided, the overall number of searches can be reduced, and the corpus of items included in the search can be decreased. As a result, there is more available computational processing power available for the e-commerce server to perform other tasks. Further, because less data is being transmitted, network bandwidth and overall Internet traffic are also reduced.

It will be realized the method just described is only an example that can be practiced from the description that follows, and it is provided to more easily understand the technology and recognize its benefits. Additional examples are now described with reference to the figures.

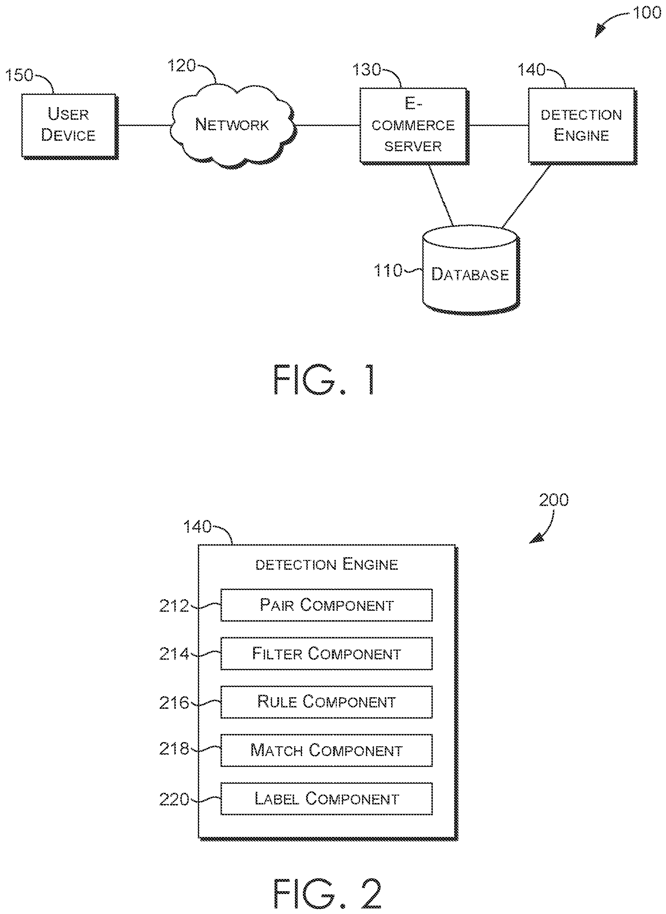

Referring initially to FIG. 1, an automatic synonyms, abbreviations, and acronyms detection system 100 is depicted suitable for use in implementing embodiments of the present invention. The automatic synonyms, abbreviations, and acronyms detection system 100 is merely an example of one suitable computing system environment and is not intended to suggest any limitation as to the scope of use or functionality of embodiments of the present invention. Neither should the automatic synonyms, abbreviations, and acronyms detection system 100 be interpreted as having any dependency or requirement related to any single module/component or combination of modules/components illustrated therein.

The automatic synonyms, abbreviations, and acronyms detection system 100 includes database 110, e-commerce server 130, detection engine 140, and user device 150, and may be in communication with one another via network 120. The network 120 may include, without limitation, one or more secure local area networks (LANs) or wide area networks (WANs). The network may be a secure network and may require that a user log in and be authenticated in order to send and/or receive information over the network.

The components/modules illustrated in FIG. 1 are exemplary in nature and in number and should not be construed as limiting. Any number of components/modules may be employed to achieve the desired functionality within the scope of embodiments hereof. Further, components/modules may be located on any number of servers. By way of example only, detection engine 140 might reside on a server, cluster of servers, or a computing device remote from one or more of the remaining components. Although illustrated as separate systems, the functionality provided by each of these components might be provided as a single component/module. For example, the functionality of the detection engine 140 may be provided by the search engine 130. The single unit depictions are meant for clarity, not to limit the scope of embodiments in any form.

Components of the automatic synonyms, abbreviations, and acronyms detection system 100 may include a processing unit, internal system memory, and a suitable system bus for coupling various system components, including one or more data stores for storing information (e.g., files and metadata associated therewith). For example, database 110 may store user profiles, search history, various listings of an electronic collection of items, one or more sets of rules, one or more sets of labeled data, models used in embodiments of the described technologies, and the like. Components of the automatic synonyms, abbreviations, and acronyms detection system 100 typically includes, or has access to, a variety of computer-readable media.

It should be understood that this and other arrangements described herein are set forth only as examples. Other arrangements and elements (e.g., machines, interfaces, functions, orders, and groupings of functions, etc.) can be used in addition to or instead of those shown, and some elements may be omitted altogether. Further, many of the elements described herein are functional entities that may be implemented as discrete or distributed components or in conjunction with other components/modules, and in any suitable combination and location. Various functions described herein as being performed by one or more entities may be carried out by hardware, firmware, and/or software. For instance, various functions may be carried out by a processor executing instructions stored in memory.

The e-commerce server 130 is generally configured to provide an electronic marketplace for buyers and sellers that enable the transaction of goods and/or services. Information including text or images corresponding to items may be received by the e-commerce server 130. The e-commerce server 130 may utilize the information to generate a listing that describes an item being offered for sale within the electronic marketplace. Additionally or alternatively, the e-commerce server 130 may utilize the information to generate searches for listings within the electronic marketplace that are responsive to the search.

Generally, the detection engine 140 is configured to automatically detect synonyms, abbreviations, and acronyms within the electronic marketplace. For example, if a user searches for a book and includes the term "ed," it is desirable for the search to return results that include the term "edition" since "ed" is a synonym for "edition" when used in connection with books. Similarly, if a user searches for a video game and includes the term "ps," it is desirable for the search to return results that include the term "playstation" since "ps" is a synonym for "playstation" when used in connection with video games.

The detection engine 140 is able to accommodate such searches by automatically detecting synonyms, abbreviations, and acronyms that are relevant to a particular search. Accordingly, the detection engine 140 can perform such detection at the granularity of an item, category, vertical, or entire catalog. For example, the detection engine 140 can detect synonyms that are only related to a specific (e.g., an iPad 2 64 GB), a category (e.g., tablets), a vertical (e.g., electronics), or for the entire catalog of items and/or services.

User device 150 may be any type of computing device used to communicate with an electronic marketplace (such as via e-commerce server 130), perform searches within an electronic collection of items maintained by the electronic marketplace, list items for sale within an electronic collection of items maintained by the electronic marketplace, or purchase items within an electronic collection of items maintained by the electronic marketplace. User device may be capable of communicating via a network with e-commerce server 130. Such devices may include any type of mobile and portable devices including cellular telephones, personal digital assistants, tablet PCs, smart phones, and the like.

Referring now to FIG. 2, the detection engine 140 includes several components. For example, the detection engine 140 may include pair component 212, filter component 214, rule component 216, match component 218, and label component 220. Initially, pair component 212 may access an electronic collection of items. Each item in the electronic collection of items may correspond to a text string comprising a title, a description, a headline, a caption, or a product name. The electronic collection of items may comprise a catalog of items for sale in an electronic marketplace, a category of items for sale in the electronic marketplace, or a product for sale in the electronic marketplace.

Pair component generates an aggregated list of token pairs from a first text string and a second text string. The first text string corresponds to a first item of the electronic collection of items and the second text string corresponds to a second, or associated item, of the electronics collection of items. Each token pair comprises a token from the first text string and a token from the second text string. In other words, if the first string is "A B C" and the second string is "D E F," the aggregated list of token pairs would be "A-D," "A-E," "A-F," "B-D," "BE," "B-F," "C-D," "C-E," and "C-F."

Filter component 214 generally filters out token pairs from the aggregated list of token pairs that do not meet a threshold similarity. In one embodiment, a trained machine learning model is utilized to filter out token pairs from the aggregated list of token pairs that do not meet a threshold similarity. For example, a machine learning model (e.g., a word2vec model) may be trained on titles that appear in the electronic collection of items. The model may filter out pairs that are "far" from each other. Continuing the example from above, if the machine learning model determines that "B" and "F" are not in the top-10 closest words for each other for the particular electronic collection of items, filter component 214 may filter out the "B-F" token pair because they are not likely synonyms.

In another embodiment, filter component 214 may filter token pairs from the aggregated list of token pairs if the first token of the token pair is a match to the second token of the token pair. For example, if the first string is "A B C" and the second string is "A E F," the aggregated list of token pairs would be "A-A," "A-E," "A-F," "B-A," "B-E," "B-F," "C-A," "C-E," and "C-F." In this example, since the token pair "A-A" comprises the first token "A" and the second token "A", filter component 214 may filter out the "A-A" token pair since they are identical matches.

Rule component 216 generally uses one or more sets of rules to eliminate false positives. For example, since the automatic synonyms, abbreviations, and acronyms detection system is fully automated, there is a risk of false positives. Model variants (e.g., "CD/DVD player" vs. "CD player", "iPhone X" vs. "iPhone Xs") or tokens which have opposite meaning (e.g., "with" vs. "without", "texture" vs. "textureless", "strape" vs "strapeless") may trick the system into labeling some tokens as synonyms when they are not. Other examples could include: "Black Metal Indoor/Outdoor Chair" vs. "Black Metal Indoor Chair"; "Nikon D850 camera with case" vs. "Nikon D850 camera without case"; "15 inch Dell Laptop with Core i7-7700HQ " vs. "15 inch Dell Laptop with Core i7-7700."

Although these cases may not frequently occur, they can be addressed using a rule-based approach (e.g., (%token%, %token%+out) → not synonym, (%token%, %token%+less) → not synonym) to increase precision. Accordingly, rule component 216, prior to determining the first token and the second token are synonyms, accesses a set of rules corresponding to false positives is accessed. Utilizing the set of rules, rule component 216 can determine the first token and the second token are not false positives.

Match component 218 attempts to match, for a first token pair from the aggregated list of token pairs, a first token of the first token pair to a second token of the first token pair. To do so, the shortest token of the token pair is initially utilized by the match component 218 in an attempt to match it to the largest token of the token pair. For example, assume the token pair is "ps-playstation." Match component 218 converts "ps" to "p.^{∗}s.^{∗}" and attempts to match it character by character to "playstation." In this case, match component 218 is successful. Simiarly, assume the token pair is "wifi-wi-fi." Match component 218 converts "wifi" to "w.^{∗}i.^{∗}f.^{∗}i.^{∗}" and attempt to match it character by character to "wi-fi." Again, the match component 218 is successful.

Upon successfully matching the first token to the second token, match component 218 determines the first token and the second token are synonyms. Continuing the examples above, match component 218 determines the tokens "ps" and "playstation" are synonyms for the token pair "ps-playstation." Similarly, match component 218 determines "wifi" and "wi-fi" are synonyms for the token pair "wifi-wi-fi." Accordingly, label component 220 labels the first token and the second token, automatically and without human intervention, as synonyms for the electronic collection of items. Detection engine 140 continues the process for each token pair until all synonyms are determined for the particular electronic collection of items.

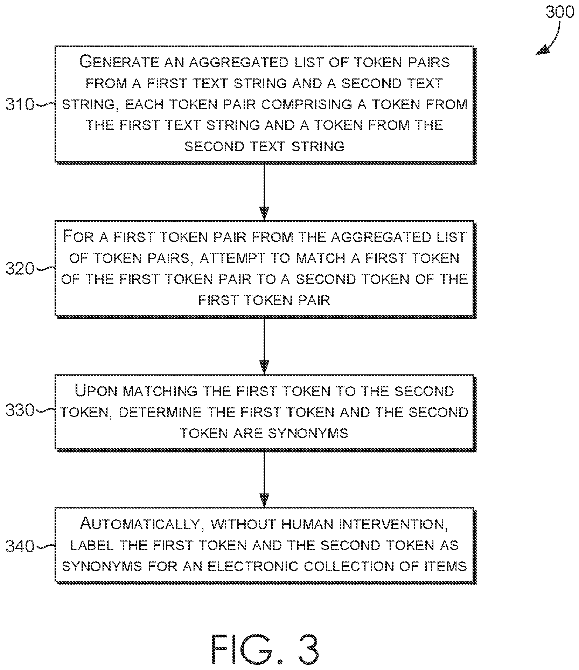

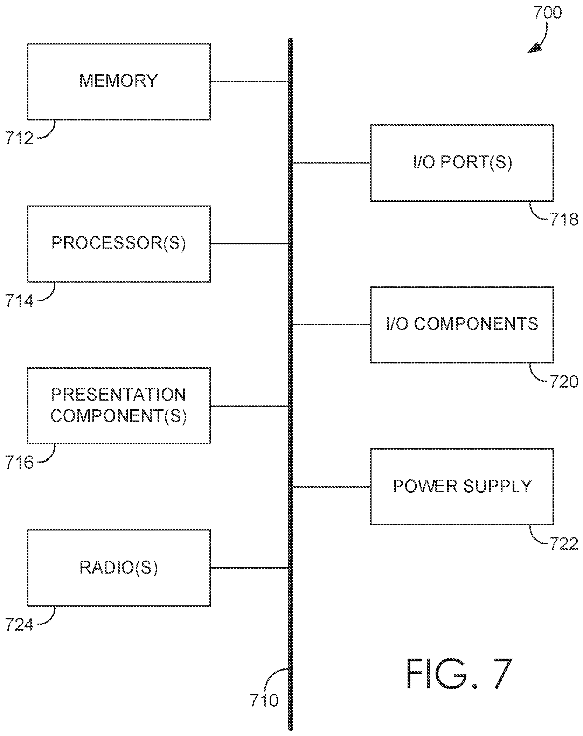

As shown in FIG. 3, a flow diagram is provided illustrating a method 300 for providing automatic synonyms, abbreviations, and acronyms detection, in accordance with various embodiments of the present disclosure. Method 300 may be performed by any computing device (such as computing device described with respect to FIG. 7) with access to an automatic synonyms, abbreviations, and acronyms detection system (such as the one described with respect to FIG. 1) or by one or more components of the automatic synonyms, abbreviations, and acronyms detection system (such as the detection engine described with respect to FIGS. 1 and 2).

Initially, at block 310, an aggregated list of token pairs is generated from a first text string and a second text string. Each token pair comprises a token from the first text string and a token from the second text string. For example, an electronic collection of items may be accessed. The electronic collection of items may comprise a catalog of items for sale in an electronic marketplace, a category of items for sale in the electronic marketplace, or a product for sale in the electronic marketplace. Each item in the electronic collection of items may correspond to a text string comprising a title, a description, a headline, a caption, or a product name.

At block 320, for a first token pair from the aggregated list of token pairs, a match is attempted between a first token of the first token pair to a second token of the first token pair. Upon matching the first token to the second token, it can be determined, at block 330, the first token and the second token are synonyms. At block 340, the first token and the second token are labeled, automatically and without human intervention, as synonyms for an electronic collection of items.

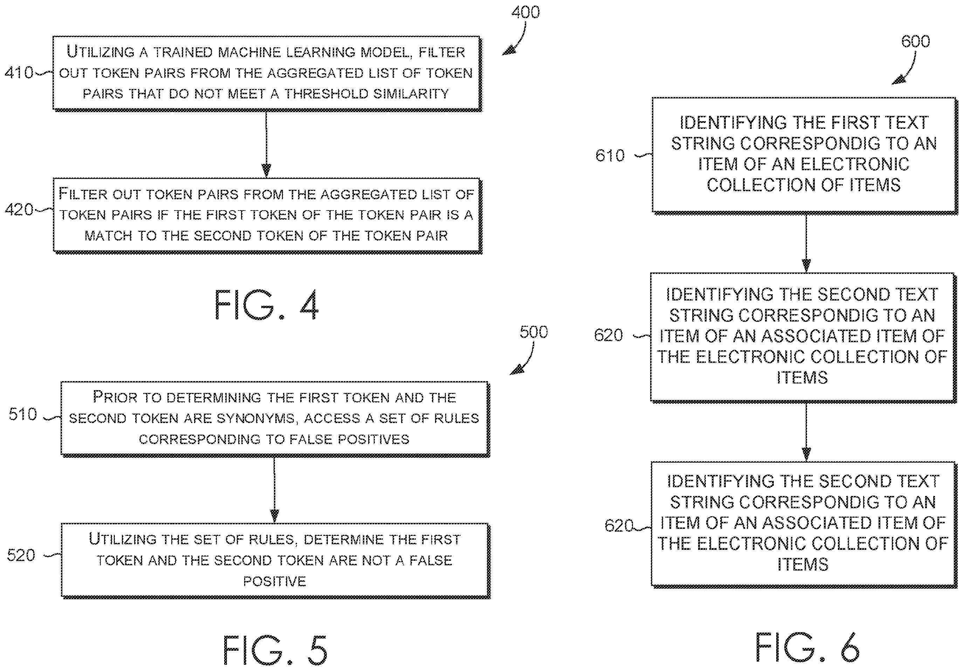

In embodiments, as shown in FIG. 4, a flow diagram shows an exemplary method 400 for filtering tokens in an automatic synonyms, abbreviations, and acronyms detection system, in accordance with an aspect described herein. Method 400 may be performed by any computing device (such as computing device described with respect to FIG. 7) with access to an automatic synonyms, abbreviations, and acronyms detection system (such as the one described with respect to FIG. 1) or by one or more components of the automatic synonyms, abbreviations, and acronyms detection system (such as the detection engine described with respect to FIGS. 1 and 2).

For clarity, by leveraging method 400, tokens pairs can be initially filtered prior to attempting the match. At block 410, a trained machine learning model filters out token pairs form the aggregated list of token pair that do not meet a threshold similarity. For example, the machine learning model (e.g., a word2vec model) may be trained on titles that appear in the electronic collection of items. The model may filter out pairs that are "far" from each other. In some embodiments, the model filters out pairs if the tokens in a respective pair are not in the top-10 closest words for each other. In this way, unrelated words may be filtered out that are not likely synonyms.

Additionally or alternatively, token pairs are filtered from the aggregated list of token pairs, at block 420, if the first token of the token pair is a match to the second token of the token pair. In other words, if the first token and the second token are identical, there is no need to proceed any further to determine if the tokens are synonyms since they are identical matches.

In embodiments, and referring now to FIG. 5, a flow diagram is provided illustrating a method 500 for determining tokens are not false positives in an automatic synonyms, abbreviations, and acronyms detection system, in accordance with an embodiment of the present invention. Method 500 may be performed by any computing device (such as computing device described with respect to FIG. 7) with access to an automatic synonyms, abbreviations, and acronyms detection system (such as the one described with respect to FIG. 1) or by one or more components of the automatic synonyms, abbreviations, and acronyms detection system (such as the detection engine described with respect to FIGS. 1 and 2). At block 510, prior to determining the first token and the second token are synonyms, a set of rules corresponding to false positives is accessed. Utilizing the set of rules, the first token and the second token can be determined to not be a false positive, at block 520.

In embodiments, FIG. 6, a flow diagram is provided illustrating a method 600 for determining an associated item of an electronic collection of items satisfies a threshold of usage within the electronic collection of items in an automatic synonyms, abbreviations, and acronyms detection system, in accordance with various embodiments of the present disclosure. Method 600 may be performed by any computing device (such as computing device described with respect to FIG. 7) with access to an automatic synonyms, abbreviations, and acronyms detection system (such as the one described with respect to FIG. 1) or by one or more components of the automatic synonyms, abbreviations, and acronyms detection system (such as the detection engine described with respect to FIGS. 1 and 2).

Prior to generating the aggregated list of token pairs is generated from a first text string and a second text string, it may be desirable to ensure the item within the electronic collection of items is mature, or used frequently enough to justify the effort of the automatic synonyms, abbreviations, and acronyms detection system. For example, in an e-commerce site, there may be thousands of items listed referencing various attributes of an "iPad." In this case, the item can be considered mature. However, there may be a number of other items that are rare, or only appear a handful of times throughout the listings. In this case, the item is not mature and there may not be enough instances of the listing to automatically identify synonyms, abbreviations, and acronyms.

In order to ensure only mature items are analyzed, at block 610, the first text string is identified as corresponding to an item of the electronic collection of items. At block 620, the second text string is identified corresponding to an associated item of the electronic collection of items. If it is determined, at block 630, the associated item of the electronic collection of items satisfies a threshold of usage within the electronic collection of items, token pairs may be generated. The threshold may be based on a number of occurrences of the associated item within the electric collection of items, a percentage of occurrences of the associated item within the electronic collection of items, a length of time the associated item has been available within the electronic collection of items, or a similar indicator of the maturity of the associated item within the electronic collection of items.

Having described an overview of embodiments of the present technology, an example operating environment in which embodiments of the present technology may be implemented is described below in order to provide a general context for various aspects of the present technology. Referring initially to FIG. 7, in particular, an example operating environment for implementing embodiments of the present technology is shown and designated generally as computing device 700. Computing device 700 is but one example of a suitable computing environment and is not intended to suggest any limitation as to the scope of use or functionality of the technology. Neither should computing device 700 be interpreted as having any dependency or requirement relating to any one or combination of components illustrated.

The technology of the present disclosure may be described in the general context of computer code or machine-useable instructions, including computer-executable instructions such as program modules, being executed by a computer or other machine, such as a personal data assistant or other handheld device. Generally, program modules including routines, programs, objects, components, data structures, etc. refer to code that perform particular tasks or implement particular abstract data types. The technology may be practiced in a variety of system configurations, including hand-held devices, consumer electronics, general-purpose computers, more specialty computing devices, etc. The technology may also be practiced in distributed computing environments where tasks are performed by remote-processing devices that are linked through a communications network.

With reference to FIG. 7, computing device 700 includes bus 710 that directly or indirectly couples the following devices: memory 712, one or more processors 714, one or more presentation components 716, input/output ports 718, input/output components 720, and illustrative power supply 722. Bus 710 represents what may be one or more busses (such as an address bus, data bus, or combination thereof). Although the various blocks of FIG. 7 are shown with lines for the sake of clarity, in reality, delineating various components is not so clear, and metaphorically, the lines would more accurately be grey and fuzzy. For example, one may consider a presentation component such as a display device to be an I/O component. Also, processors have memory. We recognize that such is the nature of the art, and reiterate that the diagram of FIG. 7 merely illustrates an example computing device that can be used in connection with one or more embodiments of the present technology. Distinction is not made between such categories as "workstation," "server," "laptop," "hand-held device," etc., as all are contemplated within the scope of FIG. 7 and reference to "computing device."

Computing device 700 typically includes a variety of computer-readable media. Computer-readable media can be any available media that can be accessed by computing device 700 and includes both volatile and nonvolatile media, removable and non-removable media. By way of example, and not limitation, computer-readable media may comprise computer storage media and communication media.

Computer storage media includes volatile and nonvolatile, removable and non-removable media implemented in any method or technology for storage of information such as computer-readable instructions, data structures, program modules or other data. Computer storage media includes, but is not limited to, RAM, ROM, EEPROM, flash memory or other memory technology, CD-ROM, digital versatile disks (DVD) or other optical disk storage, magnetic cassettes, magnetic tape, magnetic disk storage or other magnetic storage devices, or any other medium which can be used to store the desired information and which can be accessed by computing device 700. Computer storage media excludes signals per se.

Communication media typically embodies computer-readable instructions, data structures, program modules or other data in a modulated data signal such as a carrier wave or other transport mechanisms and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. Combinations of any of the above should also be included within the scope of computer-readable media.

Memory 712 includes computer storage media in the form of volatile or nonvolatile memory. The memory may be removable, non-removable, or a combination thereof. Example hardware devices include solid-state memory, hard drives, optical-disc drives, etc. Computing device 700 includes one or more processors that read data from various entities such as memory 712 or I/O components 720. Presentation component(s) 716 present data indications to a user or other device. Examples of presentation components include a display device, speaker, printing component, vibrating component, etc.

I/O ports 718 allow computing device 700 to be logically coupled to other devices including I/O components 720, some of which may be built in. Illustrative components include a microphone, joystick, game pad, satellite dish, scanner, printer, wireless device, etc.

Embodiments described above may be combined with one or more of the specifically described alternatives. In particular, an embodiment that is claimed may contain a reference, in the alternative, to more than one other embodiment. The embodiment that is claimed may specify a further limitation of the subject matter claimed.

The subject matter of the present technology is described with specificity herein to meet statutory requirements. However, the description itself is not intended to limit the scope of this disclosure. Rather, the inventors have contemplated that the claimed or disclosed subject matter might also be embodied in other ways, to include different steps or combinations of steps similar to the ones described in this document, in conjunction with other present or future technologies. Moreover, although the terms "step" or "block" might be used herein to connote different elements of methods employed, the terms should not be interpreted as implying any particular order among or between various steps herein disclosed unless and except when the order of individual steps is explicitly stated.

For purposes of this disclosure, the words "including" and "having," among other similar terms, have the same broad meaning as the word "comprising," and the word "accessing" comprises "receiving," "referencing," or "retrieving." Further the word "communicating" has the same broad meaning as the word "receiving," or "transmitting" facilitated by software or hardware-based buses, receivers, or transmitters using communication media described herein. Also, the word "initiating" has the same broad meaning as the word "executing" or "instructing" where the corresponding action can be performed to completion or interrupted based on an occurrence of another action.

In addition, words such as "a" and "an," unless otherwise indicated to the contrary, include the plural as well as the singular. Thus, for example, the constraint of "a feature" is satisfied where one or more features are present. Also, the term "or" includes the conjunctive, the disjunctive, and both (*a* or *b* thus includes either *a* or *b,* as well as *a* and *b*).

For purposes of a detailed discussion above, embodiments of the present technology are described with reference to a distributed computing environment; however, the distributed computing environment depicted herein is merely an example. Components can be configured for performing novel aspects of embodiments, where the term "configured for" can refer to "programmed to" perform particular tasks or implement particular abstract data types using code. Further, while embodiments of the present technology may generally refer to the web browser extension and the schematics described herein, it is understood that the techniques described may be extended to other implementation contexts.

From the foregoing, it will be seen that this technology is one well adapted to attain all the ends and objects described above, including other advantages that are obvious or inherent to the structure. It will be understood that certain features and subcombinations are of utility and may be employed without reference to other features and subcombinations. This is contemplated by and is within the scope of the claims. Since many possible embodiments of the described technology may be made without departing from the scope, it is to be understood that all matter described herein or illustrated in the accompanying drawings is to be interpreted as illustrative and not in a limiting sense.

## Claims

1. A method comprising:
generating an aggregated list of token pairs from a first text string and a second text string, each token pair comprising a token from the first text string and a token from the second text string;
for a first token pair from the aggregated list of token pairs, attempting to match a first token of the first token pair to a second token of the first token pair; and
upon matching the first token to the second token, determining the first token and the second token are synonyms; and
automatically, without human intervention, labeling the first token and the second token as synonyms for an electronic collection of items.

2. The method of claim 1, further comprising identifying the first text string corresponding to an item of the electronic collection of items.

3. The method of claim 1 or 2, further comprising identifying the second text string corresponding to an associated item of the electronic collection of items,
wherein the method may further comprise determining the associated item of the electronic collection of items satisfies a threshold of usage within the electronic collection of items.

4. The method of any one of claims 1 to 3, further comprising utilizing a trained machine learning model, filtering out token pairs from the aggregated list of token pairs that do not meet a threshold similarity,
wherein the method may further comprise filtering out token pairs from the aggregated list of token pairs if the first token of the token pair is a match to the second token of the token pair.

5. The method of any one of claims 1 to 4, further comprising accessing the electronic collection of items, each item in the electronic collection of items corresponding to a text string comprising a title, a description, a headline, a caption, or a product name, wherein the electronic collection of items comprises a catalog of items for sale in an electronic marketplace, a category of items for sale in the electronic marketplace, or a product for sale in the electronic marketplace.

6. The method of any one of claims 1 to 5, further comprising prior to determining the first token and the second token are synonyms, accessing a set of rules corresponding to false positives,
wherein the method may further comprise utilizing the set of rules, determining the first token and the second token are not a false positive.

7. One or more computer storage media having computer-executable instructions stored thereon that when executed by a processor, cause the processor to perform operations, the operations comprising:
generating an aggregated list of token pairs from a first text string and a second text string, each token pair comprising a token from the first text string and a token from the second text string;
utilizing a trained machine learning model, filtering out token pairs form the aggregated list of token pair that do not meet a threshold similarity;
filtering out token pairs from the aggregated list of token pairs if the first token of the token pair is a match to the second token of the token pair; and
automatically, without human intervention, labeling the first token and the second token as synonyms for an electronic collection of items.

8. The media of claim 7, further comprising, for a first token pair from the aggregated list of token pairs, attempting to match a first token of the first token pair to a second token of the first token pair,
wherein the media may further comprise, upon matching the first token to the second token, determining the first token and the second token are synonyms.

9. The media of claim 7 or 8, further comprising, prior to determining the first token and the second token are synonyms, access a set of rules corresponding to false positives,
wherein the media may further comprise utilizing the set of rules, determine the first token and the second token are not a false positive.

10. The media of any one of claims 7 to 9, further comprising:
identifying the first text string corresponding to an item of the electronic collection of items; and
identifying the second text string corresponding to an associated item of the electronic collection of items.

11. The media of claim 10, further comprising determining the associated item of the electronic collection of items satisfies a threshold of usage within the electronic collection of items.

12. A system comprising:
at least one processor; and
one or more computer storage media having computer-executable instructions stored thereon that when executed by the at least one processor, cause the at least one processor to perform operations comprising:
generating an aggregated list of token pairs from a first text string and a second text string, each token pair comprising a token from the first text string and a token from the second text string;
for a first token pair from the aggregated list of token pairs, attempting to match a first token of the first token pair to a second token of the first token pair;
prior to determining the first token and the second token are synonyms, accessing a set of rules corresponding to false positives;
utilizing the set of rules, determining the first token and the second token are not a false positive; and
automatically, without human intervention, labeling the first token and the second token as synonyms for an electronic collection of items.

13. The system of claim 12, further comprising upon matching the first token to the second token, determining the first token and the second token are synonyms.

14. The system of claim 12 or 13, further comprising:
utilizing a trained machine learning model, filtering out token pairs form the aggregated list of token pair that do not meet a threshold similarity; and
filtering out token pairs from the aggregated list of token pairs if the first token of the token pair is a match to the second token of the token pair.

15. The system of any one of claims 12 to 14, further comprising:
identifying the first text string corresponding to an item of the electronic collection of items;
identifying the second text string corresponding to an associated item of the electronic collection of items; and
determining the associated item of the electronic collection of items satisfies a threshold of usage within the electronic collection of items.
